Europäisches Patentamt

European Patent Office

Office européen des brevets

(19)

(11) Publication number: **0 349 466**
**A2**

(12) # EUROPEAN PATENT APPLICATION

(21) Application number: **89500067.7**

(22) Date of filing: **09.06.89**

(51) Int. Cl.5: **B 29 C 41/04**
**B 29 D 29/00**
**//B29K75:00**

(30) Priority: **10.06.88 ES 8801809**

(43) Date of publication of application:
**03.01.90 Bulletin 90/01**

(84) Designated Contracting States: **DE ES FR IT**

(71) Applicant: **Coteron Uriarte, José Ramon**
**2 Sombrereria Street**
**E-48005 Bilbao (ES)**

(72) Inventor: **Coteron Uriarte, José Ramon**
**2 Sombrereria Street**
**E-48005 Bilbao (ES)**

(74) Representative: **Lopez Medrano, Santiago**
**Gran Via, 40 -5.**
**E-28013 Madrid (ES)**

(54) **Improvements in the manufacturing of transmission belts.**

(57) Improvements which consist of using the centrifugal technique with a liquid plastic, for example a polyurethane elastomer, in combination with a cylindrical, rotary mould (1), open on one of its front faces (6), which is equipped on its inner side surface with a series of grooves (7) which are occupied by the liquid plastic while the mould turns by means of its shaft (2).

FIG: 1

EP 0 349 466 A2

Bundesdruckerei Berlin

## Description

The patent refers to transmission belts and more particularly to belts made of polyurethane elastomer materials or similar, which are advantageously, from the quality point of view, replacing the traditional belts made of cloth-reinforced rubber.

Polyurethane elastomer belts, even in spite of their more extensive technical characterists than those of reinforced rubber, are not widely used in industry because of their high cost, which is derived almost essentially from their manufacturing process. Until now, elastomer belts were manufactured in closed moulds under pressure and heat, to finally form lengthy strips of finished material of a certain length. For use, the said lengths are usually cut to the required measurements and their free ends are welded to adopt the characteristic ring shape, all of which is a laborious process which directly affects their cost, as stated earlier.

A basic aim of the patent is to constitute a manufacturing process for belts and similar parts using polyurethane elastomers, which notably simplify the traditional systems, providing closed moulded units in one, single operation.

To put these objectives into practice, the patent provides a hollow, cylindrical, rotary mould which is open on one of its faces and with its inner side surface equipped with grooves with a section corresponding to the section of the belt that it is wished to obtain.

The mould is connected by its closed face, and by means of a shaft, to a transmitter of turning movement for the said mould, fitted with the corresponding coupling, so that the whole of the said mould assembly can be rotated.

The inner side surface of the mould is furrowed, preferably, by a series of grooves, so that a set of belts can be produced in one, single operation, and the open front of the said mould shows a small, circular skirt, like a circular crown, whose purpose will be explained later.

To carry out the procedd, the polyurethane material is placed inside the mould in the exact, sufficient quantity as to provide the number of belts desired, so that in this first casting operation, the liquid polyurethane is controlled by the previously mentioned perimetral skirt.

Once that the liquid polyurethane has been cast, the mould is given rotary movement, thanks to which the liquid is projected towards the inner periphery where the grooves are situated. After time has been allowed for the plastic to set, the mould-drum is stopped, so that a closed assembly made up of a series of properly finished belt units has been obtained.

During this procedd, it is useful to make setting easier and speed up the demoulding time. This heating is usually of between 40 and 80 degrees Centigrade.

The procedd gives the best results with belts of diameters between 250 and 500 mm. without excluding, of course, other bigger sizes which would be accesible by increasing the diameter of the mould-drum.

To make demoulding of the manufactured units easier, means can be fitted on the side surface of the moulddrum, exactly as can be observed by referring to the figures on the sheet of drawings which is attached to this specification. This sheet shows the following:

- Figure 1 is an elevation of the open mould-drum that is envisaged by the patent.
- Figure 2 is an enlarged detail of the formal characteristics of the section of the inner side surface of the mould.
- Figure 3 shows a guide view, exaggerated with the object of understanding, of the position in which the plastic has been cast inside the open mould.
- Figure 4, finally, approximately describes the final stage of the process, just before the demoulding.

In accordance with these figures, we will firstly point out the mould-drum assembly (1), with one closed face (3) and one open face (6). From the closed front face (3) projects the shaft (2), which is connected by means of a transmission (not shown) to another driving shaft which makes the mould (1) rotate. The open face (6) is equipped with the perimetral skirt (5), of suitable height, and the inner side surface (4) of the mould is furrowed with a series of grooves (7) with suitable shape to correspond to that of the belts to be finally produced.

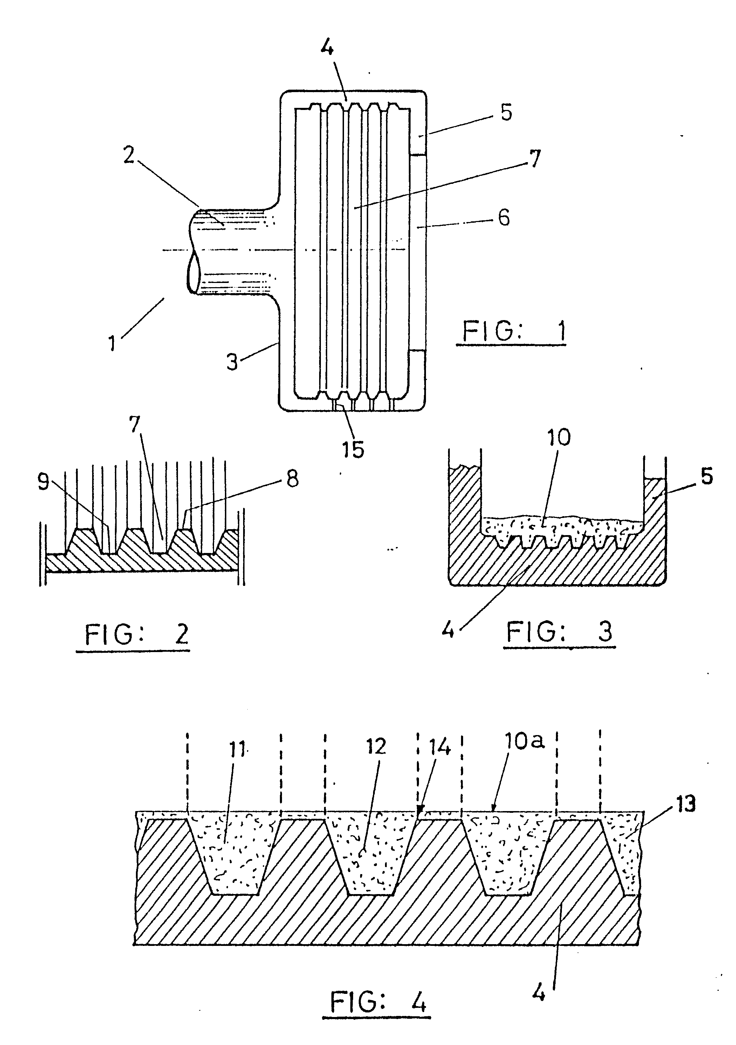

It can be seen in figure 2 how the grooves (7) form recesses (9) and projections (8), which give the appropriate section for the finished belt.

According to figure 3, the plastic (10) is poured inside the mould, so that in this first operation, the said cast material is kept in position by the perimetral skirt (5).

Once in this position, the mould (1) is made to rotate, with which the plastic (10), due to the centrifu gal force, reaches all the side surface (4) in which the grooves (7) are contained, appropriately adjusting itself to the said surface and occupying the recesses (9) in it. After a pre-set time has passed, the assembly takes on a configuration as shown graphically in figure 4.

In accordance with this diagram, the already set plastic material occupies the insides (11)-(12)-(13).... etc. of the grooves in the side (4) of the mould up to a height (10a), for example. Rotation of the mould is stopped at this moment and demoulding is started to obtain an assembly made up of a series of circular units which can be cut along the line indicated by the dots (14) in order to provide the desired belt.

Obviously, the number of grooves (7) in a specific mould can be variable, as can their section, which will be adjusted to the needs and specific shape of the belt to be made.

To make demoulding easier, passages (15) can be fitted, in which means will be arranged responsible for separating the already set belt from the mould so it can be extracted.

In another nature of things, it might be interesting on occasions to increase the tensile strength of the belts and reduce their stretching capacity, in certain applications where thus required. To do this, the possibility of incorporating a fabric over the mould is pointed out, a fabric whose weft provides sufficient space to allow the liquid plastic to pass through so that the fabric becomes soaked and embedded in it, and so that once setting and curing have taken place, the belt has the said internal fabric reinforcement.

## Claims

1.- "IMPROVEMENTS IN THE MANUFACTURE OF TRANSMISSION BELTS", characterized because in the interior of a cylindrical mould (1), open on one of its front faces (6) and closed on the opposite face, which has a series of circular grooves (7) in its internal side surface, liquid plastic is poured in and the mould is then rotated for a time, in that the liquid plastic adheres to the internal side surface of the mould and to the grooves contained in it as a result of the centrifugal force, thus forming closed circular units inside the mould, in that the set material is taken out of the mould and cut into sections according to the size of belt desired.

2.- "IMPROVEMENTS IN THE MANUFACTURE OF TRANSMISSION BELTS", in accordance with the above claim, characterized because the mould is, preferably, heated to between 40 and 80 degrees Centigrade.

3.- "IMPROVEMENTS IN THE MANUFACTURE OF TRANSMISSION BELTS", in accordance with claim 1, characterized because the liquid plastic is, preferably, a polyurethane elastomer.

4.- "IMPROVEMENTS IN THE MANUFACTURE OF TRANSMISSION BELTS", characterized because the mould (1) is cylindrically shaped, with its rear face closed and connected to a driving shaft (2), and with its front face open to allow the liquid plastic to enter, in that the internal side surface of the mould is equipped with a series of recesses which will correspond with the shape of the drawing or contact face of belt to be produced.

5.- "IMPROVEMENTS IN THE MANUFACTURE OF TRANSMISSION BELTS", in accordance with claim 4, characterized because the diameter of the internal side surface of the mould is, preferably, between 250 and 500 millimetres.

6.- "IMPROVEMENTS IN THE MANUFACTURE OF TRANSMISSION BELTS", in accordance with claim 4, characterized because the number of grooves on the inside of the mould is greater than the number of projections of a belt to be carried out and preferably a multiple of this.

7.- "IMPROVEMENTS IN THE MANUFACTURE OF TRANSMISSION BELTS", in accordance with claim 4, characterized because the front face of the mould is equipped with a small circular skirt like a circular crown.

FIG: 1

FIG: 2

FIG: 3

FIG: 4